# EUROPÄISCHE PATENTANMELDUNG

(11) **EP 3 620 627 A1**
(43) Veröffentlichungstag der Anmeldung: **11.03.2020**
(21) Anmeldenummer: 19184588.2
(22) Anmeldetag: 05.07.2019
(51) Int. Cl.: F01P 11/12, B01D 46/00, B01D 46/26, A01D 41/12, F01P 3/20, F01P 11/06

(54) **KÜHLVORRICHTUNG FÜR EINEN VERBRENNUNGSMOTOR**

(30) Priorität: 06.09.2018 DE 102018121764
(71) Anmelder: CLAAS Selbstfahrende Erntemaschinen GmbH, 33428 Harsewinkel (DE)
(72) Erfinder: BEYER, David, 48301 Nottuln (DE)
(74) Vertreter: CLAAS Gruppe

(57) **Zusammenfassung**

Die vorliegende Erfindung betrifft eine Kühlvorrichtung (5) für einen Verbrennungsmotor (4), insbesondere einer selbstfahrenden Erntemaschine (1), umfassend einen um eine Drehachse (9) rotierenden kreiszylindrischen Kühlerkorb (6) mit einer perforierten Mantelfläche (7), eine ein Lüfterrad aufweisende Ansaugvorrichtung zum Ansaugen eines Kühlluftstromes (11) durch die perforierte Mantelfläche (7) sowie eine Reinigungseinrichtung (12) zum Entfernen von sich außenseitig an dem Kühlerkorb (6) absetzenden Partikeln wobei die Reinigungsvorrichtung (12) einen Luftführungskanal (13) aufweist, welcher einen Teilluftstrom (18) des durch die Ansaugvorrichtung angesaugten Kühlluftstromes (11) abzweigt und in Richtung des Kühlerkorbes (6) umlenkt, wobei der Luftführungskanal (13) den Teilluftstrom (18) in einem Bereich des Kühlerkorbes (6) im Wesentlichen parallel zu der Drehachse (9) des Kühlerkorbes (6) führt, so dass der Teilluftstrom (18) einen Abschnitt der äußeren Mantelfläche (7) überströmt.

## Beschreibung

Die vorliegende Erfindung betrifft eine Kühlvorrichtung für einen Verbrennungsmotor, insbesondere einer selbstfahrenden Erntemaschine, gemäß dem Oberbegriff des Anspruches 1. Weiterhin betrifft die vorliegende Erfindung eine selbstfahrende Erntemaschine.

Der Antrieb von selbstfahrenden landwirtschaftlichen Erntemaschinen erfolgt durch einen Verbrennungsmotor, der vorzugsweise in deren Heckbereich angeordnet und von Verkleidungsteilen umgeben ist. Üblicherweise handelt es sich um einen wassergekühlten Verbrennungsmotor mit einem als Radiator ausgebildeten Wärmetauscher, welcher zum einen von Kühlwasser aus einem Kühlkreislauf der Brennkraftmaschine und zum anderen von der die Erntemaschine umgebenden Luft durchströmt wird. Dabei muss selbstverständlich für die Kühlung des entsprechenden Wärmetauschers stets eine ausreichende Luftmenge zur Verfügung stehen, die von einer Kühlvorrichtung mit einer Ansaugvorrichtung durch einen Kühlerkorb angesaugt wird.

Aus der EP 1 493 905 A1 ist eine Kühlvorrichtung der eingangs genannten Art bekannt. Die Kühlvorrichtung umfasst einen um eine Drehachse rotierenden, kreiszylindrischen Kühlerkorb mit einer perforierten Mantelfläche, eine ein Lüfterrad aufweisende Ansaugvorrichtung zum Ansaugen eines Kühlluftstromes durch die perforierte Mantelfläche sowie eine Reinigungseinrichtung zum Entfernen von sich außenseitig an dem Kühlerkorb absetzenden Partikeln. Die Reinigung der perforierten Mantelfläche des Kühlerkorbes wird erreicht, indem der Kühlerkorb mittels eines Hydromotors in Rotation versetzt wird, wodurch jeder Punkt der Mantelfläche nach einer Umdrehung eine feststehende Absaugdüse eines benachbart zu der Mantelfläche angeordnete Sauggebläses der Reinigungsvorrichtung passiert und der anhaftende Schmutz dabei abgesaugt wird. An der Innenseite des Kühlerkorbes ist im Bereich der Absaugdüse ein Abschirmelement angeordnet, wodurch der unter der Absaugdüse liegende Absaugbereich vom Unterdruck des Lüfterrades abgeschirmt ist. Das Sauggebläse kann den Staub dadurch absaugen, ohne gegen den Unterdruck des Lüfterrades arbeiten zu müssen. Eine solche Reinigungsvorrichtung hat eine einen relativ hohen Bauraumbedarf und umfasst kostenintensive Komponenten.

Aufgabe der vorliegenden Erfindung ist es, eine Kühlvorrichtung der eingangs genannten Art sowie eine selbstfahrende Erntemaschine mit einer Kühlvorrichtung weiterzubilden, welche sich durch eine bauraumsparende Bauweise auszeichnen.

Diese Aufgabe wird erfindungsgemäß für eine Kühlvorrichtung durch die Merkmale des Anspruches 1 gelöst. Hinsichtlich der selbstfahrenden Erntemaschine wird diese Aufgabe durch die Merkmale des Anspruches 13 gelöst.

Vorteilhafte Weiterbildungen sind Gegenstand der Unteransprüche.

Gemäß dem Anspruch 1 wird eine Kühlvorrichtung für einen Verbrennungsmotor, insbesondere einer selbstfahrenden Erntemaschine, vorgeschlagen, umfassend einen um eine Drehachse rotierenden kreiszylindrischen Kühlerkorb mit einer perforierten Mantelfläche, eine ein Lüfterrad aufweisende Ansaugvorrichtung zum Ansaugen eines Kühlluftstromes durch die perforierte Mantelfläche sowie eine Reinigungseinrichtung zum Entfernen von sich außenseitig an dem Kühlerkorb durch das Ansaugen absetzenden Partikeln. Um eine bauraumsparende Bauweise der Kühlvorrichtung zu erreichen, ist vorgesehen, dass die Reinigungsvorrichtung einen Luftführungskanal aufweist, welcher einen Teilluftstrom des durch die Ansaugvorrichtung angesaugten Kühlluftstromes abzweigt und in Richtung des Kühlerkorbes umlenkt, wobei der Luftführungskanal den Teilluftstrom in einem Bereich des Kühlerkorbes im Wesentlichen parallel zur Drehachse des Kühlerkorbes führt, so dass der Teilluftstrom einen Abschnitt der äußeren Mantelfläche überströmt. Dabei wird der Umstand genutzt, dass der von der Ansaugvorrichtung durch den Kühlerkorb hindurch angesaugte Kühlluftstrom eine Strömungsgeschwindigkeit aufweist, die so hoch ist, dass ein aus dem angesaugten Kühlluftstrom abgezweigter Teilluftstrom durch den Luftführungskanal ohne ein zusätzliches Sauggebläse, wie es im Stand der Technik erforderlich ist, rückführbar ist, um den abgezweigten Teilluftstrom über einen Abschnitt der äußeren Mantelfläche des Kühlerkorbes zu führen. Der den Abschnitt der äußeren Mantelfläche überströmende Teilluftstrom nimmt dabei in diesem Bereich auf der Mantelfläche abgesetzte Partikel mit. Durch die Rotation des Kühlerkorbes erfolgt mit jeder Umdrehung eine Mitnahme der sich in Umfangsrichtung auf der äußeren Mantelfläche absetzenden Partikel. Der Luftführungskanal ist in Umfangsrichtung im Wesentlichen geschlossen ausgeführt.

Durch den Verzicht auf das zusätzliche Sauggebläse zur Erzeugung eines zusätzlichen, unabhängigen Reinigungsluftstroms, wie es gemäß der EP 1 493 905 A1 erforderlich ist, treten bei der erfindungsgemäßen Ausgestaltung weniger starke Luftstöße auf, wodurch das Auftreten von Vibrationen gemindert wird.

Bevorzugt kann der Luftführungskanal sich abschnittsweise achsparallel zu der Mantelfläche erstrecken und auf seiner der Mantelfläche zugewandten Seite eine Aufnahmeöffnung in diesem Bereich aufweisen. Die Aufnahmeöffnung kann sich in axialer Richtung im Wesentlichen über die Bereite der Mantelfläche erstrecken. Die Aufnahmeöffnung erstreckt sich abschnittsweise in Umfangsrichtung der Mantelfläche. Die Aufnahmeöffnung definiert einen begrenzten Bereich, innerhalb dessen die Mantelfläche überströmt wird. Dabei mitgenommene Partikel können durch die Aufnahmeöffnung in den Luftführungskanal gelangen und abgefördert werden.

Insbesondere kann der Luftführungskanal eine Luftaustrittsöffnung aufweisen, der ein Abweiselement zugeordnet ist. Der aus der Luftaustrittsöffnung austretende, mit Partikeln beladene Teilluftstrom kann durch das Abweiselement in der Weise abgelenkt werden, dass eine erneute Ansaugung der Partikel weitgehend vermieden wird. Das Abweiselement kann als ein unter einem Winkel zur Luftaustrittsöffnung geneigt angeordnetes Blechbauteil ausgeführt sein.

Dabei kann der Luftführungskanal in axialer Richtung über den Kühlerkorb hinausragen. Dadurch wird der Kühlerkorb in diesem Bereich abschnittsweise abgeschirmt, wodurch einem erneuten Ansaugen der bereits abgeführten Partikel begegnet werden kann.

Vorteilhaft ist es, wenn die Luftaustrittsöffnung unterhalb des Kühlerkorbes ausmündet. Der Teilluftstrom und die darin enthaltenen Partikel können den Luftführungskanal seitlich am unterhalb des tiefsten Punktes des Kühlerkorbes verlassen.

Gemäß einer vorteilhaften Weiterbildung kann der Luftführungskanal eine Lufteintrittsöffnung aufweisen, die sich, bezogen auf eine Längsachse der Ansaugvorrichtung, abschnittsweise in axialer und tangentialer Richtung der Ansaugvorrichtung erstreckt. Insbesondere erstreckt sich die Lufteintrittsöffnung radial beabstandet zum Hüllkreis des Lüfterrades im Bereich unterhalb der Längsachse der Ansaugvorrichtung. Dadurch kann erreicht werden, dass im Wesentlichen nur radiale Strömungsanteile des von der Ansaugvorrichtung angesaugten Kühlluftstromes in den Luftführungskanal gelangen und umgeleitet werden. In Hauptströmungsrichtung wird der Kühlluftstrom von der Ansaugvorrichtung abgegebene Kühlluftstrom nicht beeinträchtigt.

Bevorzugt kann der Luftführungskanal zumindest zwei separate Abschnitte aufweisen, die miteinander lösbar verbunden sind. Hierdurch lässt sich die Reinigung und/oder Wartung der Kühlvorrichtung vereinfachen. Insbesondere kann der Kühlerkorb an einem schwenkbar am Gehäuse der Kühlvorrichtung angeordneten Rahmenbauteil angeordnet sein. Dabei kann der eine Abschnitt ebenfalls an dem Rahmenbauteil befestigt sein und ist mit diesem verschwenkbar. Zur lösbaren Verbindung der Abschnitt des Luftführungskanals kann eine flanschartig ausgebildete Trennstelle vorgesehen sein.

Insbesondere kann der Luftführungskanal einen sich in Strömungsrichtung des Teilluftstromes verjüngenden Querschnittsverlauf aufweisen. Querschnittsänderungen können dabei quer und/oder senkrecht zur Strömungsrichtung vorgesehen sein.

Weiterhin kann im Inneren des Kühlerkorbes ein Abschirmelement koaxial zur Mantelfläche angeordnet sein, welches parallel zu der Aufnahmeöffnung in dem Luftführungskanal positionierbar ist. Durch das Abschirmelement kann ein sich im Bereich der Aufnahmeöffnung jeweils befindlicher Abschnitt der Mantelfläche des rotierenden Kühlerkorbes gegenüber dem durch die Ansaugvorrichtung erzeugten Unterdruck abgeschirmt werden. Auf diese Weise kann der Mitnahmeeffekt von Partikeln auf der Mantelfläche durch die Überströmung verstärkt werden.

Bevorzugt kann das Abschirmelement auf seiner der inneren Mantelfläche zugewandten Seite eine im Randbereich umlaufende Dichtung aufweisen. Dadurch kann der Abschirmeffekt verstärkt werden. Dabei sollte die Dichtung aus einem verschleißbeständigen Material bestehen.

Des Weiteren kann im Inneren des Kühlerkorbes ein Abstreifmittel angeordnet sein, welches zu dem Abschirmelement in Umfangsrichtung des Kühlerkorbes versetzt positioniert ist. Insbesondere ist das Abstreifmittel dem Abschirmelement in Rotationsrichtung vorgelagert angeordnet, so dass auf der äußeren Mantelfläche des Kühlerkorbes abgelagerte Partikel angelöst werden, bevor der Abschnitt der äußeren Mantelfläche zwischen das Abschirmelement und die Aufnahmeöffnung des Luftführungskanal gelangt, in welchem der Abschnitt überströmt wird.

Dabei kann das Abstreifmittel als eine Bürstenwalze ausgeführt sein, die um eine Achse drehbar gelagert ist. Das als Bürstenwalze ausgeführte Abstreifmittel kann passiv oder aktiv antreibbar sein.

Weiterhin wird die eingangs gestellte Aufgabe durch eine selbstfahrende Erntemaschine gemäß dem Anspruch 13 gelöst. Die selbstfahrende Erntemaschine ist mit einer Kühlvorrichtung für einen Verbrennungsmotor ausgeführt, wobei die Kühlvorrichtung nach einem der Ansprüche 1 bis 12 ausgebildet ist. Bevorzugt handelt es sich bei der selbstfahrenden Erntemaschine um einen Mähdrescher.

Die vorliegende Erfindung wird nachstehend anhand eines in den Zeichnungen dargestellten Ausführungsbeispieles näher erläutert.

Es zeigen:
- Fig. 1: eine schematische Darstellung einer selbstfahrenden Erntemaschine in Seitenansicht;
- Fig. 2: eine perspektivische Ansicht einer Kühlvorrichtung von schräg hinten;
- Fig. 3: eine perspektivische Teilansicht der Kühlvorrichtung von schräg hinten;
- Fig. 4: eine perspektivische Ansicht der Kühlvorrichtung von schräg vorne;
- Fig. 5a: eine perspektivische Ansicht eines ersten Abschnitts eines Luftführungskanals einer Reinigungsvorrichtung der Kühlvorrichtung;
- Fig. 5b: eine perspektivische Ansicht eines zweiten Abschnitts des Luftführungskanals der Reinigungsvorrichtung.

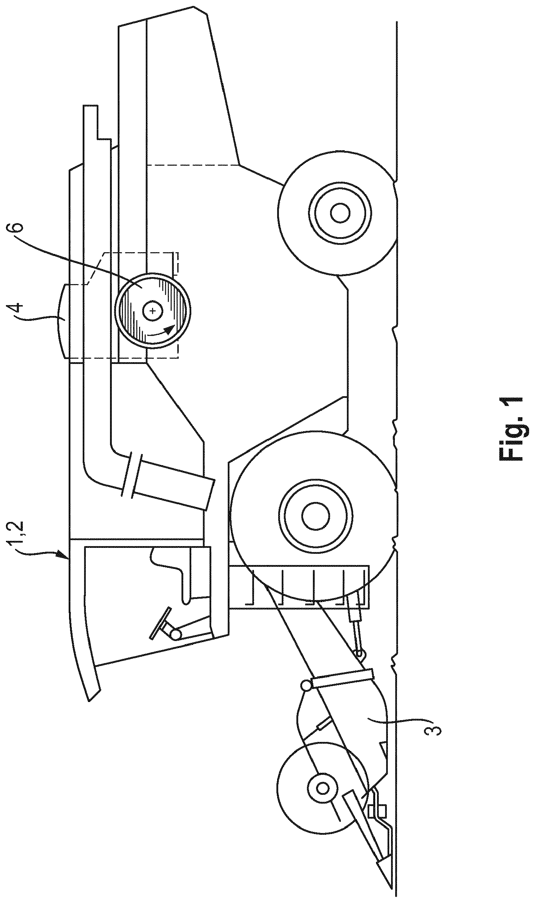

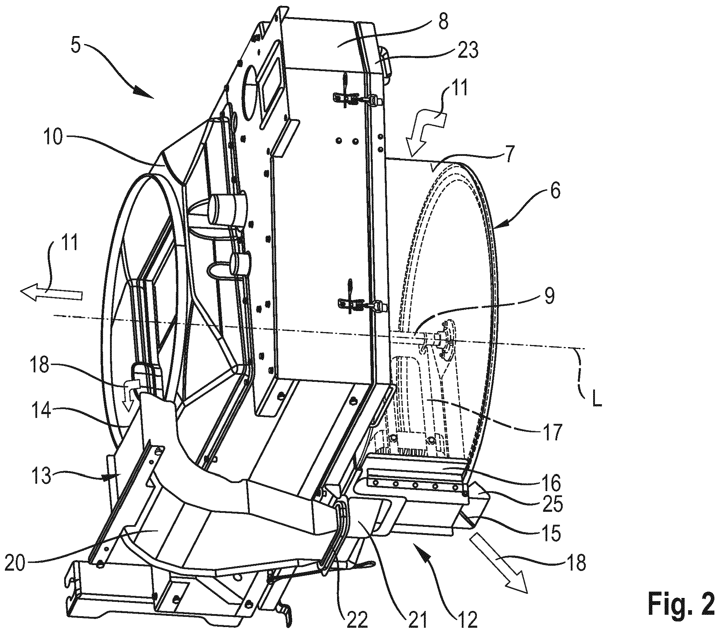

Fig1. zeigt eine schematische Darstellung einer selbstfahrenden Erntemaschine 1 in Seitenansicht. Die Erntemaschine ist als ein Mähdrescher 2 ausgeführt. Dem Mähdrescher 2 ist ein Erntevorsatzgerät 3 vorgeschaltet, durch welches nicht dargestelltes Erntegut geschnitten, aufgenommen und dem Mähdrescher 2 zur weiteren Bearbeitung zugeführt wird. Der Mähdrescher 2 wird durch einen Verbrennungsmotor 4 angetrieben. Dem Verbrennungsmotor 4 ist eine Kühlvorrichtung 5 zugeordnet, die in den nachfolgenden Fig. 2 bis 4 näher dargestellt ist, welche dem Verbrennungsmotor 4 einen Kühlluftstrom zuführt. Der Kühlvorrichtung 5 ist ein rotierend angetriebener Kühlerkorb 6 vorgeschaltet. Der Kühlerkorb 6 dient dazu, in der angesaugten Kühlluft enthaltene Partikel, wie Staub oder Kurzstroh, herauszufiltern, damit diese nicht in die Kühlvorrichtung 5 oder darüber hinaus gelangen. Hierzu weist der kreiszylindrische Kühlerkorb 6 eine perforierte bzw. siebförmige Mantelfläche 7 auf, durch die die Kühlluft von der Kühlvorrichtung 5 angesaugt wird.

In Fig. 2 ist eine perspektivische Ansicht der Kühlvorrichtung 5 von schräg hinten dargestellt. Die Kühlvorrichtung 5 umfasst ein Gehäuse 8, in welchem zumindest ein nicht dargestellter Wärmetauscher angeordnet ist. An der Vorderseite des Gehäuses 8 ist der Kühlerkorb 6 angeordnet. Der Kühlerkorb 6 rotiert um eine Drehachse 9. Mit dem Bezugszeichen L ist eine Längsachse zumindest des Kühlerkorb 6 bezeichnet. Der Antrieb des Kühlerkorbes 6 erfolgt mittels eines Antriebsmotors, der einen den Kühlerkorb 6 an seiner äußeren Mantelfläche 7 umschlingenden Riemen treibt. Auf der dem Kühlerkorb 7 abgewandten Seite des Gehäuses 8 befindet sich ein der Luftführung dienender Gehäuseabschnitt 10, in welchem ein nicht dargestelltes Lüfterrad angeordnet ist. Das Lüfterrad wird von einem Antriebsmotor angetrieben und rotiert um Rotationsachse, die mit der Längsachse L zusammenfallen kann. Mittels des rotierend angetriebenen Lüfterrades wird ein Kühlluftstrom 11 über den Umfang der perforierten bzw. siebförmigen Mantelfläche 7 angesaugt. Der Kühlluftstrom 11 durchströmt den Wärmetauscher in dem Gehäuse 8 und gelangt im Anschluss zu dem Verbrennungsmotor 4. Der Gehäuseabschnitt 10 ist als eine Windleithaube ausgeführt, um den Kühlluftstrom 11 zu bündeln und zu führen.

Um sich auf der äußeren Mantelfläche 7 absetzende Partikel zu entfernen, umfasst die Kühlvorrichtung 5 eine Reinigungsvorrichtung 12. Die Reinigungsvorrichtung 12 weist einen Luftführungskanal 13 mit einer Lufteintrittsöffnung 14 und einer Luftaustrittsöffnung 15 auf. Der Luftführungskanal 13 erstreckt sich zumindest von der Rückseite des Gehäuses 8 bis zu der Mantelfläche 7 des Kühlerkorbes 6 an der Vorderseite des Gehäuses 8. Die Anordnung des Luftführungskanals 13 verläuft abschnittsweise achsparallel zur Längsachse L. Durch die Lufteintrittsöffnung 14 gelangt ein aus dem Kühlluftstrom 11 abgezweigter Teilluftstrom 18 in den Luftführungskanal 13, der aus der Luftaustrittsöffnung 15 austritt.

Der Luftführungskanal 13 umfasst zwei Abschnitte 20, 21, eine ersten Abschnitt 20 und einen zweiten Abschnitt 21, die durch eine flanschartig ausgeführte Trennstelle 22 miteinander verbunden sind. Grundsätzlich kann der Luftführungskanal 13 auch einstückig ausgebildet sein. Der Kühlerkorb 6 ist durch ein Rahmenbauteil 23 schwenkbar an dem Gehäuse 8 der Kühlvorrichtung 5 angeordnet. Während der erste Abschnitt 20 an der Kühlvorrichtung 5 oder der Karosserie der Erntemaschine 1 befestigt sein kann, ist der zweite Abschnitt 21 ebenfalls an dem Rahmenbauteil 23 befestigt und mit diesem verschwenkbar, wenn die Kühlvorrichtung 5 zu Reinigungs- und/oder Wartungszwecken zugänglich gemacht werden soll.

Die Luftaustrittsöffnung 15 an dem zweiten Abschnitt 21 ist mit einem Abweiselement 25 versehen, welches der Umlenkung des austretenden Teilluftstromes 18 in eine der Ansaugrichtung des Luftstromes 11 abgewandte Richtung dient. Das Abweiselement 25 erstreckt sich quer zu der Luftaustrittsöffnung 15. Das Abweiselement 25 ist zur Luftaustrittsöffnung 15 geneigt angeordnet. Das Abweiselement 25 weist eine Neigung zur Strömungsrichtung des Teilluftstromes 18 auf, welche den Teilluftstrom 18 in Richtung Boden ablenkt. Die Luftaustrittsöffnung 15 mündet unterhalb des Kühlerkorbes 6 aus. Der Luftführungskanal 13 ragt in axialer Richtung über den Kühlerkorb 6 hinaus.

Im Inneren des Kühlerkorbes 6 ist an der Drehachse 9 ein Abschirmelement 16 durch Streben 17 radial beabstandet zu der Mantelfläche 7 befestigt. Das Abschirmelement 16 ist plattenförmig mit einem bogenförmigen Verlauf ausgeführt und erstreckt sich abschnittsweise in axialer und tangentialer Richtung der Mantelfläche 7. Das Abschirmelement 16 ist ortsfest angeordnet.

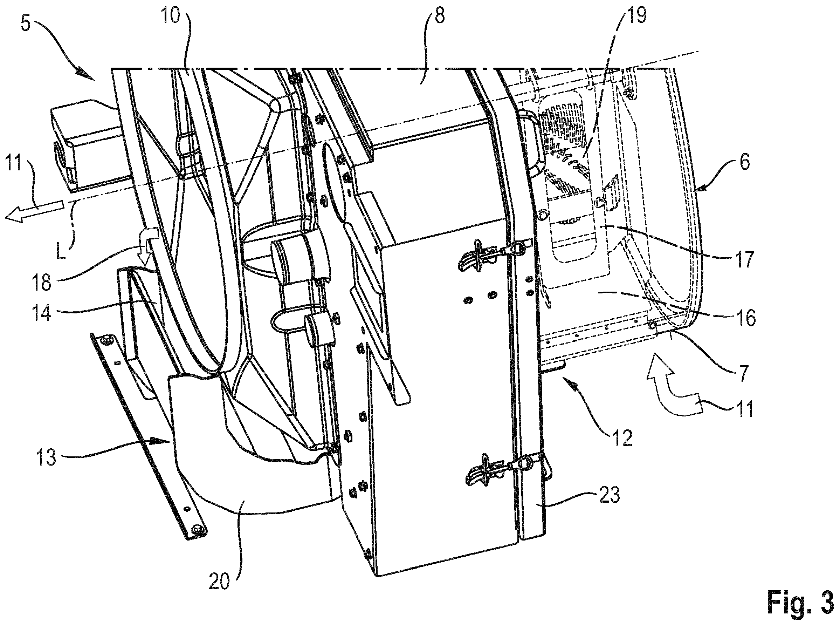

Die Darstellung in Fig. 3 zeigt eine perspektivische Teilansicht der Kühlvorrichtung 5 vom schräg hinten. Im Inneren des Kühlerkorbes 6 ist ein Abstreifmittel 19 angeordnet ist, welches zu dem Abschirmelement 16 in Umfangsrichtung des Kühlerkorbes 6 versetzt positioniert ist. Das Abstreifmittel 19 ist beispielsweise als eine Bürstenwalze ausgeführt, die um eine Achse drehbar gelagert ist. Das Abstreifmittel 19 kann aktiv oder passiv angetrieben sein, um auf der äußeren Mantelfläche 7 abgelagerte Partikel von innen heraus anzulösen, damit diese aufgenommen werden können. Die Lufteintrittsöffnung 14 erstreckt sich abschnittsweise in axialer und tangentialer Richtung der Ansaugvorrichtung respektive des Gehäuseabschnitts 10.

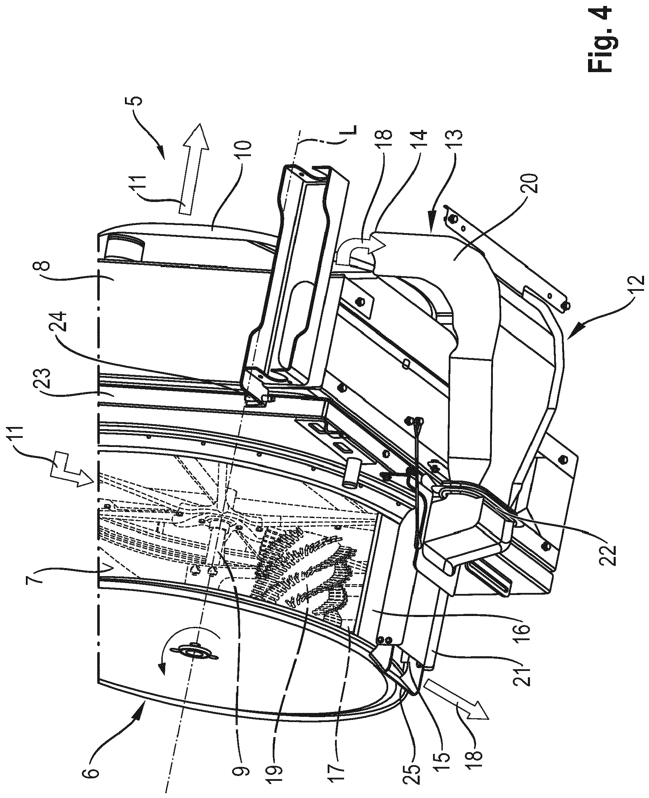

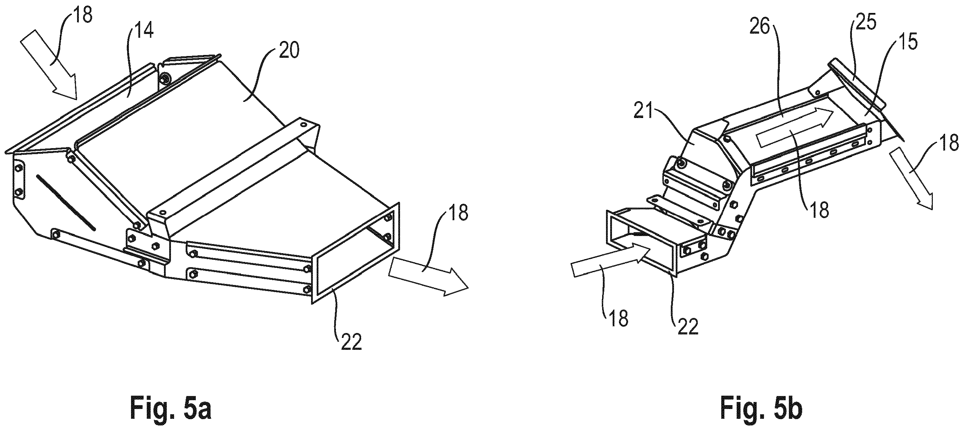

Fig. 4 zeigt eine perspektivische Ansicht der Kühlvorrichtung 5 von schräg vorne. Das Rahmenbauteil 23 ist durch Gelenke 24 schwenkbar an dem Gehäuse 8 angeordnet. Der zweite Abschnitt 21 des Luftführungskanal 13 erstreckt sich abschnittsweise achsparallel zu der Mantelfläche 7 des Kühlerkorbes 6.Auf seiner der Mantelfläche 7 zugewandten Seite weist der Luftführungskanal 13 eine Aufnahmeöffnung 26 auf, wie in Fig. 5b dargestellt.

Fig. 5a zeigt eine perspektivische Ansicht des ersten Abschnitts 20 des Luftführungskanals 13 der Reinigungsvorrichtung 12 der Kühlvorrichtung 5. In Fig. 5b ist eine perspektivische Ansicht des zweiten Abschnitts 21 des Luftführungskanals 13 der Reinigungsvorrichtung 12 dargestellt. Der Luftführungskanal 13 weist einen sich in Strömungsrichtung des Teilluftstromes 18 verjüngenden Querschnittsverlauf auf. Die Querschnittsänderungen sind dabei quer und/oder senkrecht zur Strömungsrichtung des Teilstroms 18 vorgesehen sein.

Nachfolgend wird die Funktionsweise Reinigungsvorrichtung 12 erläutert. In die Lufteintrittsöffnung 14, die sich radial beabstandet zum Hüllkreis des Lüfterrades im Bereich unterhalb der Längsachse L der Ansaugvorrichtung erstreckt, gelangt der Teilluftstrom 18, der im Wesentlichen nur radiale Strömungsanteile des von der Ansaugvorrichtung angesaugten Kühlluftstromes 11 umfasst. Durch den sich abschnittsweise in Strömungsrichtung des Teilluftstroms 18 verjüngenden Verlauf des Luftführungskanals 13 wird der Teilluftstrom 18 beschleunigt.

In dem zweiten Abschnitt 21 des Luftführungskanals 13 ist die Aufnahmeöffnung 26 angeordnet. Der Luftführungskanal 13 erstreckt sich abschnittsweise achsparallel zu der Mantelfläche 7. Die in diesem Bereich angeordnete Aufnahmeöffnung 26 ist der Mantelfläche 7 zugewandt. Der den Luftführungskanal 13 durchströmende Teilluftstrom 18 überströmt in dem Bereich der Aufnahmeöffnung 26 die Oberfläche der äußeren Mantelfläche 7 des rotierenden Kühlerkorbes 6. Das der Aufnahmeöffnung 26 gegenüberliegend positionierte Abschirmelement 16 schirmt die Aufnahmeöffnung 26 gegenüber dem durch die Ansaugvorrichtung der Kühlvorrichtung 5 erzeugten Unterdruck ab. An der äußeren Mantelfläche 7 abgelagerte Partikel werden von dem Teilluftstrom 18 mitgenommen und durch die Luftaustrittsöffnung 15, die unterhalb des Kühlerkorbes 6 ausmündet, abgeführt.

Das im dargestellten Ausführungsbeispiel als Bürstenwalze ausgeführte Abstreifmittel 19 unterstützt diesen Vorgang, indem es die abgelagerten Partikel anlöst, bevor der Abschnitt der Mantelfläche 7 sich zwischen der Aufnahmeöffnung 26 und dem Abschirmelement 16 befindet. Die Reinigungsvorrichtung 12 nutzt den von der Ansaugvorrichtung der Kühlvorrichtung 5 angesaugten Kühlluftstrom 11, um daraus einen Teilluftstrom 18 zu Reinigungszwecken abzuzweigen und diesen durch den Luftführungskanal 13 ohne ein zusätzliches Sauggebläse zu der Mantelfläche 7 zurückzuführen, um den Teilluftstrom 18 im Bereich der Aufnahmeöffnung 26 über die äußere Mantelfläche 7 zu führen.

### Bezugszeichenliste

- 1: Erntemaschine
- 2: Mähdrescher
- 3: Erntevorsatzgerät
- 4: Verbrennungsmotor
- 5: Kühlvorrichtung
- 6: Kühlerkorb
- 7: Mantelfläche
- 8: Gehäuse
- 9: Drehachse
- 10: Gehäuseabschnitt
- 11: Kühlluftstrom
- 12: Reinigungsvorrichtung
- 13: Luftführungskanal
- 14: Lufteintrittsöffnung
- 15: Luftaustrittsöffnung
- 16: Abschirmelement
- 17: Strebe
- 18: Teilluftstrom
- 19: Abstreifmittel
- 20: Erster Abschnitt von 13
- 21: Zweiter Abschnitt von 13
- 22: Trennstelle
- 23: Rahmenbauteil
- 24: Gelenk
- 25: Abweiselement
- 26: Aufnahmeöffnung

## Patentansprüche

1. Kühlvorrichtung (5) für einen Verbrennungsmotor (4), insbesondere einer selbstfahrenden Erntemaschine (1, 2), umfassend einen um eine Drehachse (9) rotierenden kreiszylindrischen Kühlerkorb (6) mit einer perforierten Mantelfläche (7), eine ein Lüfterrad aufweisende Ansaugvorrichtung zum Ansaugen eines Kühlluftstromes (11) durch die perforierte Mantelfläche (7) sowie eine Reinigungseinrichtung (12) zum Entfernen von sich außenseitig an dem Kühlerkorb (6) absetzenden Partikeln, **dadurch gekennzeichnet, dass** die Reinigungsvorrichtung (12) einen Luftführungskanal (13) aufweist, welcher einen Teilluftstrom (18) des durch die Ansaugvorrichtung angesaugten Kühlluftstromes (11) abzweigt und in Richtung des Kühlerkorbes (6) umlenkt, wobei der Luftführungskanal (13) den Teilluftstrom (18) in einem Bereich des Kühlerkorbes (6) im Wesentlichen parallel zu der Drehachse (9) des Kühlerkorbes (6) führt, so dass der Teilluftstrom (18) einen Abschnitt der äußeren Mantelfläche (7) überströmt.

2. Kühlvorrichtung (5) nach Anspruch 1, **dadurch gekennzeichnet, dass** der Luftführungskanal (13) sich abschnittsweise achsparallel zu der Mantelfläche (7) erstreckt und auf seiner der Mantelfläche (7) zugewandten Seite eine Aufnahmeöffnung (26) in diesem Bereich aufweist.

3. Kühlvorrichtung (5) nach Anspruch 1 oder 2, **dadurch gekennzeichnet, dass** der Luftführungskanal (13) eine Luftaustrittsöffnung (15) aufweist, der ein Abweiselement (25) zugeordnet ist.

4. Kühlvorrichtung (5) nach einem der Ansprüche 1 bis 3, **dadurch gekennzeichnet, dass** der Luftführungskanal (13) in axialer Richtung über den Kühlerkorb (6) hinausragt.

5. Kühlvorrichtung (5) nach Anspruch 3 oder 4, **dadurch gekennzeichnet, dass** die Luftaustrittsöffnung (15) unterhalb des Kühlerkorbes (6) ausmündet.

6. Kühlvorrichtung (5) nach einem der vorangehenden Ansprüche, **dadurch gekennzeichnet, dass** der Luftführungskanal (13) eine Lufteintrittsöffnung (14) aufweist, die sich abschnittsweise in axialer und tangentialer Richtung der Ansaugvorrichtung erstreckt.

7. Kühlvorrichtung (5) nach einem der vorangehenden Ansprüche, **dadurch gekennzeichnet, dass** der Luftführungskanal (13) zumindest zwei separate Abschnitte (20, 21) aufweist, die miteinander lösbar verbunden sind.

8. Kühlvorrichtung (5) nach einem der Ansprüche 2 bis 7, **dadurch gekennzeichnet, dass** im Inneren des Kühlerkorbes (6) ein Abschirmelement (16) koaxial zur Mantelfläche (7) angeordnet ist, welches parallel zu der Aufnahmeöffnung (26) in dem Luftführungskanal (13) positionierbar ist.

9. Kühlvorrichtung (5) nach Anspruch 8, **dadurch gekennzeichnet, dass** das Abschirmelement (16) die Mantelfläche (7) des Kühlerkorbes (6) zumindest im Bereich der Aufnahmeöffnung (26) in axialer und tangentialer Richtung überdeckt.

10. Kühlvorrichtung (5) nach einem der Ansprüche 8 oder 9, **dadurch gekennzeichnet, dass** das Abschirmelement (16) auf seiner der inneren Mantelfläche (7) zugewandten Seite eine im Randbereich umlaufende Dichtung aufweist.

11. Kühlvorrichtung (5) nach einem der Ansprüche 8 bis 10, **dadurch gekennzeichnet, dass** im Inneren des Kühlerkorbes (6) ein Abstreifmittel (19) angeordnet ist, welches zu dem Abschirmelement (16) in Umfangsrichtung des Kühlerkorbes (6) versetzt positioniert ist.

12. Kühlvorrichtung (5) nach Anspruch 11, **dadurch gekennzeichnet, dass** das Abstreifmittel (19) als eine Bürstenwalze ausgeführt ist, die um eine Achse drehbar gelagert ist.

13. Selbstfahrende Erntemaschine (1, 2) mit einer Kühlvorrichtung (5) für einen Verbrennungsmotor (4), **dadurch gekennzeichnet, dass** die Kühlvorrichtung (5) nach einem der Ansprüche 1 bis 12 ausgebildet ist.
